**Europäisches Patentamt**

**European Patent Office**

**Office européen des brevets**

(19)

(11) Veröffentlichungsnummer: **0 233 346**
**B1**

(12) **EUROPÄISCHE PATENTSCHRIFT**

(45) Veröffentlichungstag der Patentschrift:
23.08.89

(51) Int. Cl.⁴: **G01P 1/02**

(21) Anmeldenummer: **86117364.9**

(22) Anmeldetag: **12.12.86**

(54) **Drehzahlsensor einer Gleitschutzanlage für Fahrzeuge.**

(30) Priorität: **24.01.86 CH 286/86**

(43) Veröffentlichungstag der Anmeldung:
**26.08.87 Patentblatt 87/35**

(45) Bekanntmachung des Hinweises auf die Patenterteilung:
**23.08.89 Patentblatt 89/34**

(84) Benannte Vertragsstaaten:
**AT BE CH DE ES FR GB GR IT LI NL SE**

(56) Entgegenhaltungen:
**DE-A- 2 643 286**
**GB-A- 2 107 882**
**US-A- 3 497 770**

(73) Patentinhaber: **Werkzeugmaschinenfabrik Oerlikon-Bührle AG, Birchstrasse 155, CH-8050 Zürich(CH)**

(72) Erfinder: **Grob, Peter, Bachtelstrasse 9, D-8304 Wallisellen(DE)**
Erfinder: **Paluschinski, Hans, Harossenstrasse 17, D-8311 Brütten(DE)**

## Beschreibung

Die Erfindung bezieht sich auf einen Drehzahlsensor einer Gleitschutzanlage für Fahrzeuge, mit einem Gehäuse und darin elektrisch isoliert angeordneter Sonde und Schaltplatte.

Solche Drehzahlsensoren, beispielsweise ausgebildet als magnetische Impulsgeber und im Zusammenwirken mit einem an einer Radachse befestigten Polrad, werden beispielsweise zum Bestimmen von Fahrzeugachsdrehzahlen von Schienenfahrzeugen verwendet, siehe europäische Patentanmeldung Nr. 0 137 270 A2. Dabei werden pro überwachte Radachse je ein Drehzahlsensor benötigt, welche üblicherweise in den Achslagerdeckeln angeordnet sind. Eine zentrale Auswerteelektronik der Gleitschutzanlage jedoch ist in räumlicher Distanz zu den Drehzahlsensoren angeordnet. Es hat sich nun gezeigt, dass die Messung durch Einstreuung von elektrischen Störfeldern in die Elektronik des Drehzahlsensors verfälscht wird.

Ferner zeigt US-A 3 497 770 eine Geschwindigkeitsmesseinrichtung, bei der eine Sonde und Schaltelemente elektrisch isoliert in einem Gehäuse angeordnet sowie das Gehäuse und die Abschirmung eines Zuführkabels zusammen elektrisch geerdet sind. An der Stirnseite ist das Gehäuse jedoch nicht verschlossen. Bei der DE-A1 2 643 286, welche eine ähnliche Einrichtung zur Lageerkennung einer rotierenden Welle zeigt, ist dagegen das Gehäuse auf der Stirnseite mit einer Kappe aus magnetisch nicht leitfähigem Material versehen, um die im Gehäuse angeordneten Bauteile vor Verschmutzung zu schützen.

Die Erfindung, wie sie im Anspruch 1 gekennzeichnet ist, löst die Aufgabe, einen gegen Störeinflüsse unempfindlicheren Drehzahlsensor zu schaffen.

Die durch die Erfindung erreichten Vorteile sind im wesentlichen darin zu sehen, dass die Elektronik des Drehzahlsensors empfindlicher ausgeführt und somit ein grösserer Abstand bzw. Luftspalt zwischen Sensor und Polrad gewählt werden kann.

Im folgenden wird ein Ausführungsbeispiel der Erfindung anhand der beigefügten Zeichnungen näher erläutert. Es zeigt:

Fig.1 einen Drehzahlsensor teilweise im Schnitt und
Fig.2 einen Schnitt gemäss dem Schnitt A-A in Fig.1.

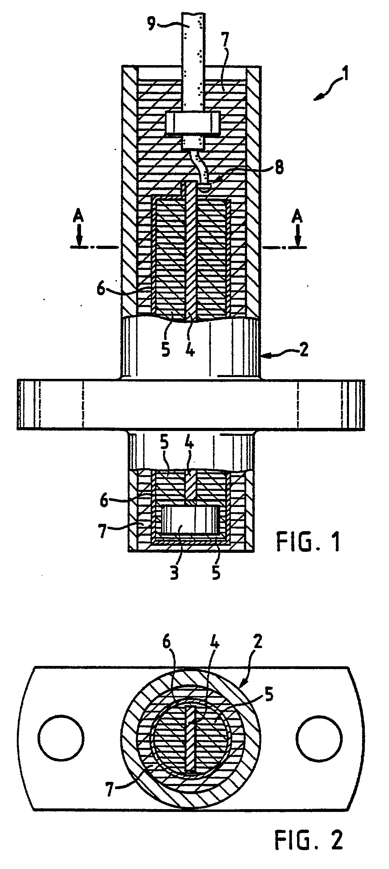

Gemäss den Figuren 1 und 2 besteht ein Drehzahlsensor 1 aus einem Gehäuse 2 und je einer darin elektrisch isoliert angeordneten Sonde 3 und Schaltplatte 4. Die Sonde 3, beispielsweise eine magnetisch vorgespannte Hallsonde, ist mit dem einen Ende der Schaltplatte 4 mechanisch und elektrisch verbunden. Auf der Schaltplatte 4 ist, hier nicht näher dargestellt, die Elektronik des Drehzahlsensors 1 angeordnet. Die Schaltplatte 4 und dazugehörige Elektronik ist von einer ersten Umhüllung 5 aus elektrisch isolierendem Material umfasst. Auch die Sonde 3 ist von einer ersten Umhüllung 5 aus elektrisch isolierendem Material umfasst, wobei dieser Teil beispielsweise ein separater Kaufteil sein kann. Im vorliegenden Ausführungsbeispiel bilden die Sonde 3 und die Schaltplatte 4 zusammen mit ihren ersten Umhüllungen 5 einen zylinderförmigen Körper. Direkt anliegend über diesen zylinderförmigen Körper ist eine zweite Umhüllung 6 aus elektrisch leitendem Material angeordnet, beispielsweise eine galvanisch aufgebrachte Kupferschicht. Freigehalten von der ersten Umhüllung 5 und der zweiten Umhüllung 6 bleibt nur ein Bereich an der Schaltplatte 4 für eine Anschlussstelle 8 der Elektronik der Schaltplatte 4. In diesem Beispiel befindet sich diese Anschlussstelle 8 an dem der Sonde 3 gegenüberliegenden andern Ende der Schaltplatte 4. Allerdings ist diese zweite Umhüllung 6 mit einer Elektronikerde der Schaltplatte 4 elektrisch verbunden, wie dies in Fig.1 im Bereich der Anschlussstelle 8 andeutungsweise dargestellt ist, beispielsweise durch die Verbindung der zweiten Umhüllung 6 mit einer Leiterbahn auf der der Anschlussstelle 8 gegenüberliegenden Seite der Schaltplatte 4. Durch ein an der Anschlussstelle 8 angeschlossenes Kabel 9 ist der Drehzahlsensor mit einer nicht dargestellten Auswerteelektronik für die Gleitschutzanlage verbunden. Eine dritte Umhüllung 7 aus elektrisch isolierendem Material gewährleistet die Kurzschluss-Sicherheit zwischen dem elektrischen Teil und dem Gehäuse 2. Beispielsweise wird ein elektrisch isolierendes Giessharz verwendet, d.h. der elektrische Teil inkl. Anschlussstelle 8 und Kabel 9 ist in das Gehäuse 2 eingegossen.

Elektrische Störfelder, insbesondere Störpotentiale zwischen dem elektronischen Teil des Drehzahlsensors 1 und der nicht dargestellten Auswerteelektronik der Gleitschutzanlage, werden durch die vorgeschlagene Abschirmungsart weitgehend vermieden.

## Patentansprüche

1. Drehzahlsensor (1) einer Gleitschutzanlage für Fahrzeuge, mit einem Gehäuse (2) und darin elektrisch isoliert angeordneter Sonde (3) und Schaltplatte (4), dadurch gekennzeichnet, dass Sonde (3) und Schaltplatte (4) erste Umhüllungen (5) aus elektrisch isolierendem Material und darüber anliegend zweite Umhüllungen (6) aus elektrisch leitendem Material aufweisen und dass die zweiten Umhüllungen (6) an Elektronikerde der Schaltplatte (4) angeschlossen sind.

2. Drehzahlsensor gemäss Anspruch 1, dadurch gekennzeichnet, dass als zweite Umhüllung (6) eine galvanisch aufgebrachte Kupferschicht vorgesehen ist.

3. Drehzahlsensor gemäss Anspruch 2, dadurch gekennzeichnet, dass Sonde (3) und Schaltplatte (4) eine Einheit mit einer gemeinsamen Umhüllung (6) bilden.

4. Drehzahlsensor gemäss Anspruch 3, dadurch gekennzeichnet, dass diese Einheit mittels einer dritten Umhüllung (7) aus elektrisch isolierendem Material in dem Gehäuse (2) eingegossen ist.

## Claims

1. Revolution sensor (1) for an anti-slip installation for vehicles, with a housing (2) and disposed therein an electrically insulated probe (3) and plugboard (4), characterised in that the probe (3) and plugboard (4) have first barriers (5) of electrically insulating material and resting thereon second barriers (6) of electrically conductive material, and in that the second barriers (6) are connected to functional earths of the plugboard (4).

2. Revolution sensor according to claim 1, characterised by the provision of a galvanically applied coating of copper as the second barrier (6).

3. Revolution sensor according to claim 2, characterised in that the probe (3) and plugboard (4) form a unit with a common barrier (6).

4. Revolution sensor according to claim 3, characterised in that said unit is cast in the housing (2) using a third barrier (7) of electrically insulating material.

## Revendications

1. Capteur tachymétrique (1) pour un système anti-patinage destiné à des véhicules automobiles, comportant un boîtier (2) contenant une sonde (3) et une plaque de circuit (4) isolés électriquement, capteur caractérisé en ce que la sonde (3) et la plaque de circuit (4) sont munies d'une première enveloppe (5) en un matériau isolant électrique et par dessus celle une seconde enveloppe (6) en un matériau conducteur d'électricité, cette seconde enveloppe (6) étant reliée à la masse électronique de la plaque de circuit (4).

2. Capteur tachymétrique selon la revendication 1, caractérisé en ce que la seconde enveloppe (6) est une couche de cuivre appliquée par un procédé galvanique.

3. Capteur tachymétrique selon la revendication 2, caractérisé en ce que la sonde (3) et la plaque de circuit (4) forment un ensemble présentant une enveloppe commune (6).

4. Capteur tachymétrique selon la revendication 3, caractérisé en ce que cet ensemble est noyé par une troisième enveloppe (7) en un matériau isolant électrique dans le boîtier (2).

FIG. 1

FIG. 2